# EUROPEAN PATENT APPLICATION

(11) **EP 1 871 034 A1**
(43) Date of publication of application: **26.12.2007**
(21) Application number: 07012292.4
(22) Date of filing: 22.06.2007
(51) Int. Cl.: H04L 1/18

(54) **Method and apparatus of packet discard in a wireless communications system**

(30) Priority: 22.06.2006 US 805473 P
(71) Applicant: Innovative Sonic Limited, Road Town Tortola (VG)
(72) Inventor: Jiang, Sam Shiaw-Shiang, Peitou Taipei City (TW)
(74) Representative: Schaeberle, Steffen

(57) **Abstract**

To enhance the efficiency of packet discard, the present invention provides a method of packet discard for a receiver in a wireless communications system. The method comprises setting a discard timer used for triggering packet discard in an Automatic Repeat Request process (302), reporting a negative acknowledgment signal and starting the discard timer when a packet corresponding to a missing sequence number is detected to be not retransmitted by a Hybrid Automatic Repeat Request process any more (304), and stopping receiving the packet corresponding to the missing sequence number when the discard timer expires and the packet is not successfully received (306).

## Description

This application claims the benefit of U.S. Provisional Application No. 60/805,473, filed on JUN 22, 2006 and entitled "Method and Apparatus for Implicit Data Discard in a Wireless Communications System," the contents of which are incorporated herein by reference.

The present invention relates to a method and apparatus of packet discard in a wireless communications system according to the pre-characterizing clauses of claims 1, 8, 15, 16, 17, and 21.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to combine Radio Link Control (RLC) layer and Medium Access Control (MAC) layer into the same communication layer, so that the system structure becomes simple.

A complete protocol specification is accomplished with lasting discussion, editing, and modification. Now, parts of the LTE structure are under Technical Report (TR) stage, meaning that the related protocol specifications are not finished. Therefore, many functions are still For Further Study (FFS). For example, in 3GPP TR 25.813 V1.0.1, "Evolved Universal Terrestrial Radion Access (E-UTRA) and Evolved Universl Terrestrail Radio Access Network (E-UTRAN) Radio interface protocol aspects (Release 7)," an RLC (Radio Link Control) layer performing ARQ (Automatic Repeat Request) functionality is an upper layer of a MAC (Medium Access Control) layer performing HARQ (Hybrid Automatic Repeat Request) functionality. In addition, Section 6.2 of 3GPP TR 25.813 V1.0.1 describes that the RLC transmitter can invoke a discard procedure. However, how to invoke the discard procedure in the RLC transmitter is FFS and is not specified.

Since protocol for invoking the discard procedure is FFS, the related operation can only be achieved by the prior art. For example, according to Section 9.7.3 of 3GPP TS 25.322 V7.0.0, "RLC protocol specification (Release 7)," UTRAN can configure the RLC entity to discard an RLC SDU (Server Data Unit) when a discard timer corresponding to the RLC SDU expires or when the number of transmissions for the RLC SDU is greater than a predefined maximum number of transmissions (MaxDAT). SDU discard procedures can be classified into an explicit data discard procedure and an implicit data discard procedure.

In general, the explicit data discard procedure is used in an AM (Acknowledgement Mode) RLC entity, which triggers discard of an RLC SDU either when a discard timer corresponding to the RLC SDU expires or when one of the RLC PDUs (Protocol Data Units) that carry segments of the RLC SDU has been transmitted for a predefined number of times without getting any positive acknowledgement signal from the peer receiver. In either case, the RLC entity of the transmitter invokes a discard procedure by sending an MRW SUFI (Move Receiving Window Super Field) message to the peer receiver. The peer receiver responds with an MRW ACK SUFI message when it receives the MRW SUFI message. When the transmitter receives the MRW ACK SUFI message, the RLC SDU discard procedure ends and the transmitter can discard the RLC SDU safely because there will be no transmission deadlock.

The explicit data discard procedure takes at least one RTT (round trip time) for exchange of the MRW SUFI and MRW ACK SUFI messages between the transmitter and the receiver, which increases transmission time. In addition, the MRW SUFI and MRW ACK SUFI messages occupy some radio resources.

The implicit data discard procedure is used in a UM (Unacknowledgement Mode) RLC entity, which only uses a discard timer to trigger discard of an RLC SDU. When an RLC SDU is discarded by the UM RLC entity, the UM RLC entity directly discards the RLC SDU and sends the next transmitted PDU with SN (Sequence Number) incremented by 2, and the receiver can accordingly detect data discard in the transmitter.

The implicit data discard procedure only works for UM, where SN increment by 2 must be applicable.

Besides, according to 3GPP TS 25.321 V7.0.0, "MAC protocol specification (Release 7)," for an HARQ entity of an HSDPA (High Speed Downlink Package Access) system, neither MRW SUFI nor jumping SN protocol is used for packet discard. Instead, the receiver starts a discard timer when one or multiple gaps (missing SN) are detected. If the discard timer expires and some of the said one or multiple gaps (the old gaps) are still not received successfully, the receiver discards any remaining old gaps and stop expecting for the reception of them. If new gaps are detected when the discard timer is running, the above procedure repeats itself after the discard timer expires or after all the old gaps have been received successfully. Note that, only one discard timer per re-ordering queue is used for the HARQ entity, i.e. only after the discard timer expires or stops, can the discard timer be started again. In such situation, since multiple gaps share one discard timer, discard of packets corresponding to earlier gaps may be delayed and packets after the earlier gaps are stored in the buffer unnecessarily, so that data latency is increased.

In the RLC entity, duration of discard timer for an RLC SDU, called RLC discard timer hereinafter, matches with the QoS requirement, while duration of discard timer used in HARQ, called HARQ discard timer hereinafter, is limited by HARQ procedure itself instead of by the QoS requirement. The reason is that, in the receiving side, the HARQ discard timer is used for a re-ordering queue to solve problems due to NACK-to-ACK error or DTX-to-ACK error, which might occur in an HARQ process. When the RLC entity of the receiver detects one of the transmission errors, the receiver sends a negative acknowledged status report to request for a retransmission. If the transmitter receives this request before the RLC discard timer expires, the RLC entity of the transmitter will re-submit the corresponding packet to the HARQ entity for transmission. Thus, duration of the HARQ discard timer must be set to be shorter than what is specified by QoS requirement in general. Otherwise, if duration of the HARQ discard time is set to be equal to or longer than the QoS requirement, the missing packets due to NACK-to-ACK error or DTX-to-ACK error will have no chance to get retransmitted by the RLC entity of the transmitter. In other words, when duration of the HARQ discard time is set to be equal to or longer than what is specified by the QoS requirement, the RLC discard timer will expire on or before the time when the HARQ discard timer expires before the HARQ process receives an ACK (ACK in HARQ procedure) corresponding to a packet, so that the packet will be discarded and an explicit data discard procedure may be invoked, which increases transmission time and decreases transmission efficiency.

Therefore, how to design a high-efficiency data discard procedure applicable to the advanced high-speed wireless communications system becomes an objective in the art.

This in mind, the present invention aims at providing a method and apparatus of packet discard in a wireless communications system that discards packets without exchange of MRW SUFI and MRW ACK SUFI messages between the transmitter and the receiver.

This is achieved by a method and apparatus of packet discard in a wireless communications system according to claims 1, 8, 15, 16, 17, and 21. The dependent claims pertain to corresponding further developments and improvements.

As will be seen more clearly from the detailed description following below, the claimed method of packet discard for a receiver in a wireless communications system comprises setting a discard timer used for triggering packet discard in an Automatic Repeat Request process, reporting a negative acknowledgment signal and starting the discard timer when a packet corresponding to a missing sequence number is detected to be not retransmitted by a Hybrid Automatic Repeat Request process any more, and stopping receiving the packet corresponding to the missing sequence number when the discard timer expires and the packet is not successfully received.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart diagram of a process according to the first embodiment of the present invention.
Fig. 4 is a flowchart diagram of a process according to the second embodiment of the present invention.
Fig. 5 is a flowchart diagram of a process according to the third embodiment of the present invention.

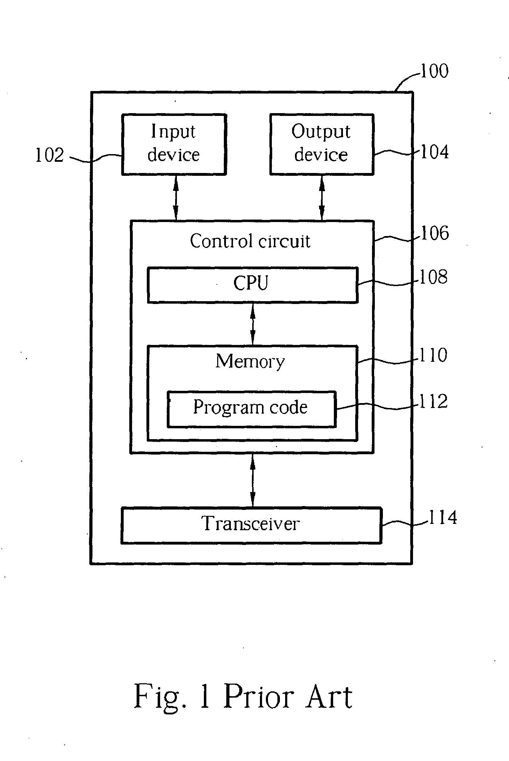

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

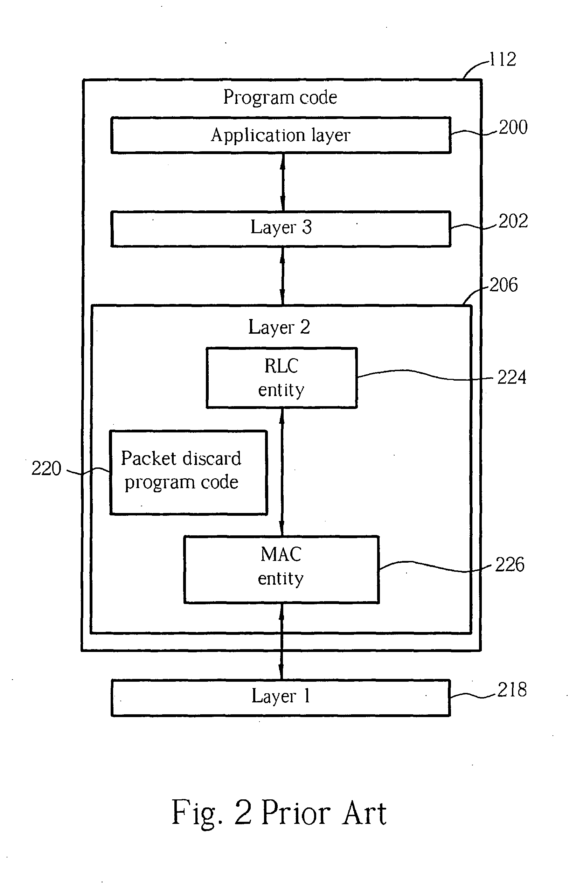

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

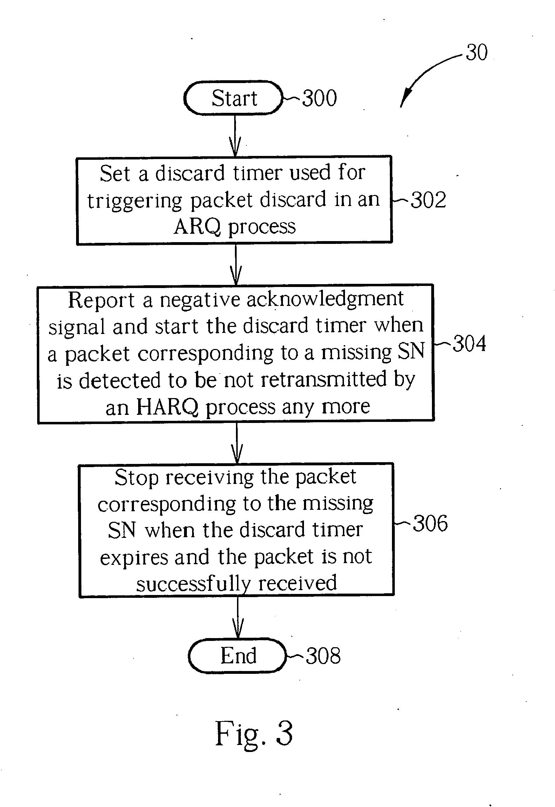

An advanced wireless communications system, such as LTE, supports only packet-switched transmission, so that the RLC entity 224 and the MAC entity 226 are located in the same spot, such as a base station, and they can be combined into one communication entity for simplicity. Note that whether the RLC entity 224 and the MAC entity 226 are combined into one communication entity is only a modeling issue and is not relevant to the present invention. The present invention provides a packet discard program code 220 for timely discarding packets. Please refer to Fig. 3, which illustrates a schematic diagram of a process 30 according to the first embodiment of the present invention. The process 30 is utilized for triggering packet discard in a receiver of a wireless communications system, and can be compiled into the packet discard program code 220. The process 30 comprises the following steps:
Step 300: Start.
Step 302: Set a discard timer used for triggering packet discard in an ARQ process.
Step 304: Report a negative acknowledgment signal and start the discard timer when a packet corresponding to a missing SN is detected to be not retransmitted by an HARQ process any more.
Step 306: Stop receiving the packet corresponding to the missing SN when the discard timer expires and the packet is not successfully received.
Step 308: End.

According to the process 30, the first embodiment of the present invention sets a discard timer for triggering packet discard in the receiver first. When the receiver detects that a packet corresponding to a missing SN is not retransmitted by the HARQ process, the receiver report a NACK and start the discard timer. If the discard timer expires while the packet corresponding to the missing SN is not yet received, the first embodiment of the present invention stops receiving the packet corresponding to the missing SN. In other words, using the process 30, the receiver can timely trigger packet discard according to the status of the discard timer, without waiting for MRW SUFI messages. That is, the first embodiment of the present invention is a new implicit packet discard procedure for the receiver.

In the process 30, the step that the packet corresponding to the missing SN is detected to be not retransmitted by the HARQ process any more is preferably done by detecting that the missing SN moves out of a first receiving window. The first receiving window is used for a packet reordering function of the HARQ process. Preferably, the first receiving window is a Pull Type sliding window, which is advanced when a packet with an SN outside the first receiving window is received, and the SN is set to be the updated upper edge of the Pull Type window. Also, if an SN in the Pull Type sliding window that is not received is moved below the lower edge of the Pull Type sliding window due to the advancement of the Pull Type sliding window, the SN is detected as a missing SN. Moreover, in the process 30, the step that the packet corresponding to the missing SN is detected to be not retransmitted by the HARQ process any more is preferably done by detecting a NACK-to-ACK error or a DTX-to-ACK error.

In the process 30, stopping receiving the packet corresponding to the missing sequence number is preferably done by discarding the missing sequence number, and advancing a second receiving window used for the ARQ process, so as to make the missing SN below the second receiving window. Preferably, the second receiving window is a Push Type sliding window, which is advanced only when a packet corresponding to a lower edge of the Push Type sliding window is received successfully or is informed to be discarded, and a packet with an sequence number outside the Push Type sliding window is discarded.

Therefore, using the process 30, the receiver can timely trigger packet discard without exchange of MRW SUFI and MRW ACK SUFI messages between the transmitter and the receiver, so as to enhance transmission efficiency.

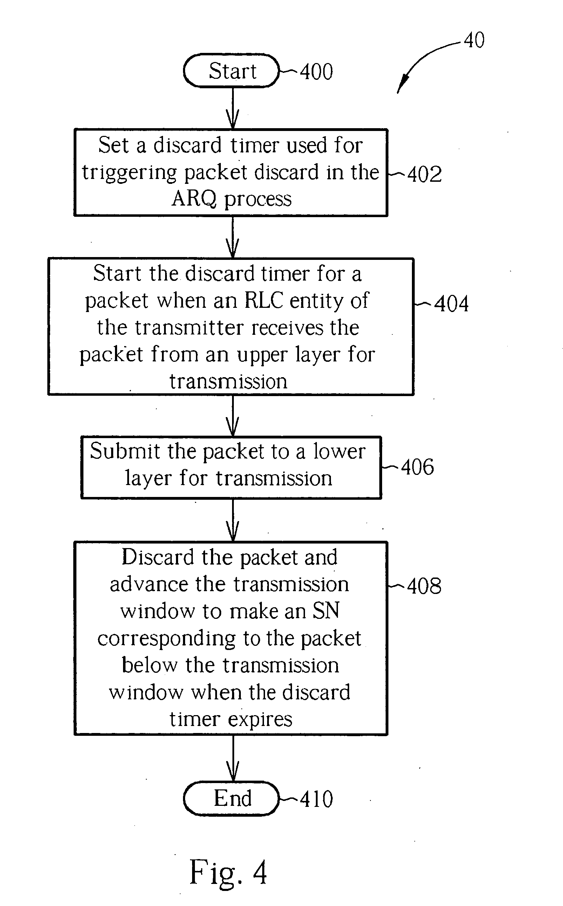

Please refer to Fig. 4, which illustrates a schematic diagram of a process 40 according to the second embodiment of the present invention. The process 40 is utilized for triggering packet discard in a transmitter performing an ARQ process with a transmission window in a wireless communications system, and can be compiled into the packet discard program code 220. The process 40 comprises the following steps:
Step 400: Start.
Step 402: Set a discard timer used for triggering packet discard in the ARQ process.
Step 404: Start the discard timer for a packet when an RLC entity of the transmitter receives the packet from an upper layer for transmission.
Step 406: Submit the packet to a lower layer for transmission.
Step 408: Discard the packet and advance the transmission window to make an SN corresponding to the packet below the transmission window when the discard timer expires.
Step 410: End.

According to the process 40, the second embodiment of the present invention sets a discard timer for triggering packet discard in the transmitter. When the RLC entity of the transmitter receives a packet from the upper layer for transmission, the transmitter starts the discard timer, and submits the packet to the lower layer for transmission. Next, when the discard timer expires, the transmitter discards the packet and advances the transmission window, so as to make the SN corresponding to the packet below the transmission window. In other words, using the process 40, the transmitter can timely discard packets according to the status of the discard timer, without transmitting the MRW SUFI message and waiting for the corresponding MRW ACK SUFI message, or generating a jump in sequence number for the next packet. That is, the second embodiment of the present invention is a new implicit packet discard procedure for the transmitter.

Therefore, using the process 40, the transmitter can timely trigger packet discard without exchange of MRW SUFI and MRW ACK SUFI messages between the transmitter and the receiver, so as to enhance transmission efficiency.

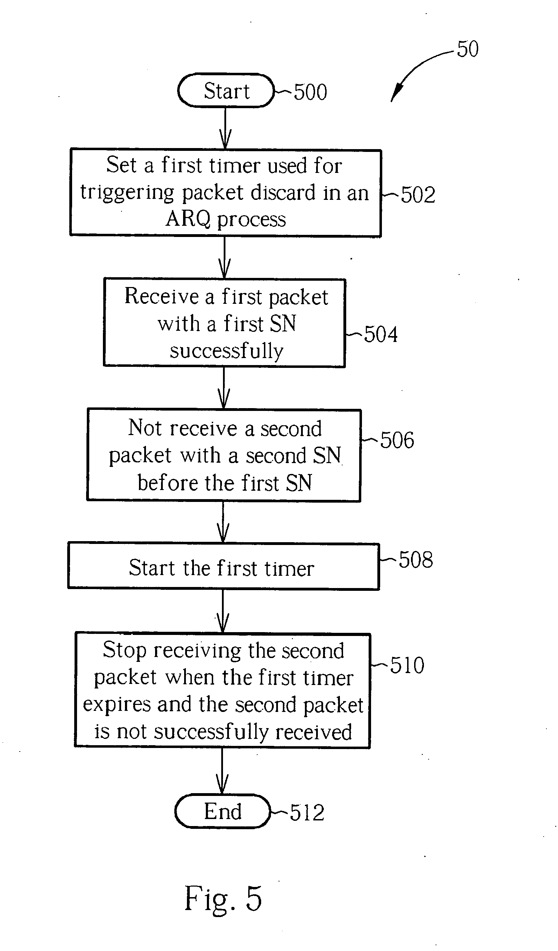

Please refer to Fig. 5, which illustrates a schematic diagram of a process 50 according to the third embodiment of the present invention. The process 50 is utilized for triggering packet discard in a receiver of a wireless communications system, and can be compiled into the packet discard program code 220. The process 50 comprises the following steps:
Step 500: Start.
Step 502: Set a first timer used for triggering packet discard in an ARQ process.
Step 504: Receive a first packet with a first SN successfully.
Step 506: Not receive a second packet with a second SN before the first SN.
Step 508: Start the first timer.
Step 510: Stop receiving the second packet when the first timer expires and the second packet is not successfully received.
Step 512: End.

According to the process 50, the third embodiment of the present invention sets a first timer for triggering packet discard in the ARQ process in the receiver. IF the receiver successfully receives a first packet but does not receive a second packet before the first packet, the receiver starts the first timer. When the first timer expires while the second packet is not yet received, the third embodiment of the present invention stops receiving the second packet. In other words, using the process 50, the receiver can timely trigger packet discard according to the status of the first timer, without waiting for MRW SUFI messages. That is, the third embodiment of the present invention is a new implicit packet discard procedure for the receiver. Note that, the third embodiment of the present invention is not fully included in U.S. Provisional Application No. 60/805,473.

Preferably, the process 50 can further set a second timer used for triggering NACK in the ARQ process. If the receiver successfully receives a third packet successfully but does not receive a fourth packet before the third packet, the receiver starts the second timer. When the second timer expires while the fourth packet is not yet received, the third embodiment of the present invention preferably responds with a NACK corresponding to the fourth packet. In other words, the third embodiment of present invention uses two timers. One timer is long (the first timer), and the other is short (the second timer). When the receiver successfully receives a packet but does not receive a former packet, the receiver starts the two timers. If the (short) second timer expires while the former packet is not yet received, the receiver responds a NACK corresponding to the former packet for a retransmission of the former packet. Next, if the (long) first timer expires and the former packet is still not received, the receiver stops receiving the former packet.

Therefore, using the process 50, the receiver can timely request for a retransmission of a missing packet, and can timely trigger packet discard without exchange of MRW SUFI and MRW ACK SUFI messages between the transmitter and the receiver, so as to enhance transmission efficiency.

In summary, the present invention can discard packet without exchange of MRW SUFI and MRW ACK SUFI messages between the transmitter and the receiver. Therefore, transmission time and radio resources can be decreased, so as to enhance transmission efficiency.

## Claims

1. A method of packet discard for a receiver in a wireless communications system comprising:
setting a discard timer used for triggering packet discard in an Automatic Repeat Request process (302);
**characterized by** reporting a negative acknowledgment signal and starting the discard timer when a packet corresponding to a missing sequence number is detected to be not retransmitted by a Hybrid Automatic Repeat Request process any more (304); and
stopping receiving the packet corresponding to the missing sequence number when the discard timer expires and the packet is not successfully received (306).

2. The method of claim 1, **characterized in that** the step that the packet corresponding to the missing sequence number is detected to be not retransmitted by the Hybrid Automatic Repeat Request process any more is done by detecting that the missing sequence number moves out of a first receiving window.

3. The method of claim 2, **characterized in that** the first receiving window is used for a packet reordering function of the Hybrid Automatic Repeat Request process.

4. The method of claim 2, **characterized in that**
the first receiving window is a Pull Type sliding window, which is advanced when a packet with a first sequence number outside the Pull Type sliding window is received;
the first sequence number is set to be the updated upper edge of the Pull Type window; and
if a second sequence number in the Pull Type sliding window that is not received is moved below the lower edge of the Pull Type sliding window due to the advancement of the Pull Type sliding window, the second sequence number is detected as a missing sequence number.

5. The method of claim 1, **characterized in that** the step that the packet corresponding to the missing sequence number is detected to be not retransmitted by the Hybrid Automatic Repeat Request process any more is done by detecting a NACK-to-ACK error or a DTX-to-ACK error.

6. The method of claim 1, **characterized in that** stopping receiving the packet corresponding to the missing sequence number is discarding the missing sequence number, and advancing a second receiving window used for the Automatic Repeat Request process, so as to make the missing sequence number below the second receiving window.

7. The method of claim 6, **characterized in that** the second receiving window is a Push Type sliding window, which is advanced only when a packet corresponding to a lower edge of the Push Type sliding window is received successfully or is informed to be discarded, and a packet with an sequence number outside the Push Type sliding window is discarded.

8. A communications device (100) of a wireless communications system utilized for triggering packet discard in an Automatic Repeat Request process comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
setting a discard timer used for triggering packet discard in an Automatic Repeat Request process (302);
**characterized in that** the program code (112) further comprises reporting a negative acknowledgment signal and starting the discard timer when a packet corresponding to a missing sequence number is detected to be not retransmitted by a Hybrid Automatic Repeat Request process any more (304); and
stopping receiving the packet corresponding to the missing sequence number when the discard timer expires and the packet is not successfully received (306).

9. The communications device of claim 8, **characterized in that** the step that the packet corresponding to the missing sequence number is detected to be not retransmitted by the Hybrid Automatic Repeat Request process any more in the program code (112) is done by detecting that the missing sequence number moves out of a first receiving window.

10. The communications device of claim 9, **characterized in that** the first receiving window is used for a packet reordering function of the Hybrid Automatic Repeat Request process.

11. The communications device of claim 9, **characterized in that**
the first receiving window is a Pull Type sliding window, which is advanced when a packet with a first sequence number outside the Pull Type sliding window is received;
the first sequence number is set to be the updated upper edge of the Pull Type window; and
if a second sequence number in the Pull Type sliding window that is not received is moved below the lower edge of the Pull Type sliding window due to the advancement of the Pull Type sliding window, the second sequence number is detected as a missing sequence number.

12. The communications device of claim 8, **characterized in that** the step that the packet corresponding to the missing sequence number is detected to be not retransmitted by the Hybrid Automatic Repeat Request process any more in the program code (112) is done by detecting a NACK-to-ACK error or a DTX-to-ACK error.

13. The communications device of claim 8, **characterized in that** stopping receiving the packet corresponding to the missing sequence number in the program code (112) is discarding the missing sequence number, and advancing a second receiving window used for the Automatic Repeat Request process, so as to make the missing sequence number below the second receiving window.

14. The communications device of claim 13, **characterized in that** the second receiving window is a Push Type sliding window, which is advanced only when a packet corresponding to a lower edge of the Push Type sliding window is received successfully or is informed to be discarded, and a packet with an sequence number outside the Push Type sliding window is discarded.

15. A method of packet discard for a transmitter performing an Automatic Repeat Request process with a transmission window in a wireless communications system comprising:
setting a discard timer used for triggering packet discard in the Automatic Repeat Request process (402);
starting the discard timer for a packet when a radio link control entity of the transmitter receives the packet from an upper layer for transmission (404); and
submitting the packet to a lower layer for transmission (406);
**characterized by** discarding the packet and advancing the transmission window to make a sequence number corresponding to the packet below the transmission window when the discard timer expires (408).

16. A communications device (100) of a wireless communications system utilized for triggering packet discard, capable of performing an Automatic Repeat Request process with a transmission window, comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
setting a discard timer used for triggering packet discard in the Automatic Repeat Request process (402);
starting the discard timer for a packet when a radio link control entity of the communications device receives the packet from an upper layer for transmission (404); and
submitting the packet to a lower layer for transmission (406);
**characterized in that** the program code (112) further comprises discarding the packet and advancing the transmission window to make a sequence number corresponding to the packet below the transmission window when the discard timer expires (408).

17. A method of packet discard for a receiver in a wireless communications system comprising:
setting a first timer used for triggering packet discard in an Automatic Repeat Request process (502);
receiving a first packet with a first sequence number successfully (504);
not receiving a second packet with a second sequence number before the first sequence number (506); and
starting the first timer (508);
**characterized by** stopping receiving the second packet when the first timer expires and the second packet is not successfully received (510).

18. The method of claim 17 further comprising:
setting a second timer for triggering a negative acknowledgement message in the Automatic Repeat Request process;
receiving a third packet with a third sequence number successfully;
not receiving a fourth packet with a fourth sequence number before the third sequence number;
starting the second timer; and
report a negative acknowledgement message corresponding to the fourth packet when the second timer expires and the fourth packet is not successfully received.

19. The method of claim 17, **characterized in that** stopping receiving the second packet is discarding the second sequence number, and advancing a receiving window used for the Automatic Repeat Request process, so as to make the second sequence number below the receiving window.

20. The method of claim 19, **characterized in that** the receiving window is a Push Type sliding window, which is advanced only when a packet corresponding to a lower edge of the Push Type sliding window is received successfully or is informed to be discarded, and a packet with a sequence number outside the Push Type sliding window is discarded.

21. A communications device (100) of a wireless communications system utilized for triggering packet discard in an Automatic Repeat Request process comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
setting a first timer used for triggering packet discard in an Automatic Repeat Request process (502);
receiving a first packet with a first sequence number successfully (504);
not receiving a second packet with a second sequence number before the first sequence number (506); and
starting the first timer (508);
**characterized in that** the program code (112) further comprises stopping receiving the second packet when the first timer expires and the second packet is not successfully received (510).

22. The communications device of claim 21, **characterized in that** the program code (112) further comprises:
setting a first timer used for triggering packet discard in an Automatic Repeat Request process;
receiving a first packet with a first sequence number successfully;
not receiving a second packet with a second sequence number before the first sequence number;
starting the first timer; and
stopping receiving the second packet when the first timer expires and the second packet is not successfully received.

23. The communications device of claim 21, **characterized in that** stopping receiving the second packet in the program code (112) is discarding the second sequence number, and advancing a receiving window used for the Automatic Repeat Request process, so as to make the second sequence number below the receiving window.

24. The communications device of claim 23, **characterized in that** the receiving window is a Push Type sliding window, which is advanced only when a packet corresponding to a lower edge of the Push Type sliding window is received successfully or is informed to be discarded, and a packet with a sequence number outside the Push Type sliding window is discarded.
